# NEUE EUROPÄISCHE PATENTSCHRIFT

(11) **EP 1 943 078 B2**
(45) Veröffentlichungstag und Bekanntmachung des Hinweises auf die Entscheidung über den Einspruch: **11.05.2022**
(45) Hinweis auf die Patenterteilung: 18.01.2012
(21) Anmeldenummer: 06829241.6
(22) Anmeldetag: 01.12.2006
(51) Int. Cl.: B29C 45/28, B29C 45/83

(54) **BETÄTIGUNGSVORRICHTUNG FÜR VERSCHLUSSNADELN IN SPRITZGIESSVORRICHTUNGEN MIT NADELVERSCHLUSSDÜSEN**
ACTUATING DEVICE FOR SHUT-OFF NEEDLES IN INJECTION MOULDING DEVICES COMPRISING NEEDLE SHUT-OFF NOZZLES
DISPOSITIF D'ACTIONNEMENT DE POINTEAUX DE VANNES DANS DES DISPOSITIFS DE MOULAGE PAR INJECTION COMPORTANT DES BUSES A VANNES A POINTEAUX

(30) Priorität: 28.12.2005 DE 202005020412 U
(43) Veröffentlichungstag der Anmeldung: 16.07.2008
(73) Patentinhaber: Günther Heisskanaltechnik GmbH, 35066 Frankenberg/Eder (DE)
(72) Erfinder: GÜNTHER, Herbert, 35108 Allendorf (DE)
(74) Vertreter: Patentanwälte Olbricht Buchhold Keulertz
(86) Internationale Anmeldenummer: PCT/EP2006/011573
(87) Internationale Veröffentlichungsnummer: WO 2007/079836

(56) Entgegenhaltungen:
- EP-A- 0 548 823
- EP-A1- 1 184 152
- EP-A2- 1 025 974
- DE-A1- 1 906 921
- DE-A1- 2 357 962
- DE-A1- 10 202 924
- DE-A1- 19 611 880
- DE-A1- 19 720 927
- GB-A- 2 343 409
- JP-A- 5 042 568
- JP-A- 2000 190 367
- US-A1- 3 582 157
- US-A1- 3 969 057
- US-A1- 4 497 621
- US-B1- 6 238 197
- US-B1- 6 461 143

## Beschreibung

Die Erfindung betrifft eine Betätigungsvorrichtung für Verschlußnadeln in Spritzgießwerkzeugen mit Nadelverschlußdüsen gemäß dem Oberbegriff von Anspruch 1 sowie ein Spritzgießwerkzeug nach Anspruch 27.

Nadelverschlußdüsen werden in Spritzgießwerkzeugen eingesetzt, um eine fließfähige Masse bei einer vorgebbaren Temperatur unter hohem Druck einem trennbaren Formeinsatz zuzuführen. Sie haben meist pneumatisch oder hydraulisch angetriebene Verschlußnadeln, die Angußöffnungen im Formeinsatz periodisch öffnen und verschließen. Jede Verschlußnadel ist hierzu im werkzeugseitigen Bereich der Spritzgießvorrichtung axialverschieblich gelagert und im düsenseitigen Bereich bevorzugt mittig durch einen Strömungskanal für die zu verarbeitende Masse hindurchgeführt. Der Strömungskanal endet in einem Düsenendstück, das eine Düsenaustrittsöffnung bildet. In Schließstellung greift das untere Ende der Verschlußnadel in einen Dichtsitz ein, der im Düsenendstück oder im Formeinsatz ausgebildet ist.

Für zahlreiche Anwendungen ist es notwendig, alle Verschlußnadeln synchron zu bewegen und mit gleicher Schließkraft zu beaufschlagen, insbesondere dann, wenn in einem Werkzeug mehrere Formeinsätze gleichzeitig angespritzt werden.

EP-A1-0 790 116 schlägt dazu vor, die Verschlußnadeln einer Düsengruppe an einer gemeinsamen Trägerplatte festzulegen, die eine Hubbewegung in Längsrichtung der Verschlußnadeln ausführt. Die Trägerplatte ist hierzu stirnseitig zwischen zwei ortsfesten Anschlägen und seitlich zwischen zwei Führungsleisten angeordnet, die innerhalb einer Aufspannplatte längsverschieblich gelagert sind und an ihren der Trägerplatte zugewandten Seitenflächen schräg angeordnete Gleitsteine oder Gleitnocken aufweisen. Letztere greifen seitlich in die Trägerplatte ein, die mit schräg verlaufenden Nuten versehen ist. Werden die Führungsleisten mittels eines Antriebs in Längsrichtung hin- und hergeschoben, bewegt sich die Trägerplatte senkrecht dazu auf und ab. Dadurch führen alle an der Trägerplatte befestigten Verschlußnadeln die gleiche Hubbewegung aus.

Von Nachteil hierbei ist, daß die Schrägnuten der Trägerplatte und die darin geführten Gleitsteine oder Nocken einem relativ hohen Verschleiß ausgesetzt sind, insbesondere bei raschen Schußfolgen. Dies zwingt - trotz der Verwendung von Gleit- oder Schmiermitteln - zu häufigen Wartungsunterbrechungen. Die Betriebs- und Wartungskosten sind entsprechend hoch.

Auch EP 1 184 152 A1 sieht vor, die Verschlussnadeln einer Düsengruppe an einer gemeinsamen Trägerplatte festzulegen. Problematisch ist auch hier der Verschleiß der gegeneinander bewegten Teile, weshalb vorgesehen ist, diese beispielsweise mit gesinterter Bronze zu beschichten. Eine andere Möglichkeit der Beschichtung gegeneinander beweglicher Teile ist beispielsweise, wie in US 6.461.143 B1 dargestellt, das Aufbringen von diamantähnlichen Materialien.

Bei einem aus DE-A1-196 11 880 bekannten Spritzgießwerkzeug mit mehreren Nadelverschlußdüsen ist jede Verschlußnadel an einem separaten Nadelträgerelement befestigt. Letztere sind an zwei gegenüberliegenden Flachseiten mit schräg liegenden Führungsnocken versehen, die in schräg verlaufende Nuten eines gabelförmigen Schieberahmens eingreifen. Unterhalb der Flachseiten ist an jedem Nadelträgerelement ein zylindrischer Abschnitt ausgebildet, der in der Art eines Hubkolbens in einer Führungsbuchse axialverschieblich gelagert ist. Bewegt man den Schieberahmen hin und her, werden die einzelnen Nadelträgerelemente senkrecht dazu auf und ab bewegt.

Problematisch hierbei ist, daß bedingt durch maßliche Toleranzen ein exakt gleichzeitiges Eintreten der Verschlußnadeln in den jeweils zugeordneten Dichtsitz nicht zu gewährleisten ist. Aus diesem Grund ist jede Verschlußnadel über ein elastisches Zwischenelement an ihrem Nadelträgerelement befestigt, was sowohl den Montageaufwand als auch die Herstellkosten erhöht. Hohe Reibungskräfte zwischen den Führungsnocken und dem Schieberahmen sind auch hier von Nachteil.

DE-A1-199 07 116 offenbart einen zwischen zwei Werkzeugplatten ausgebildeten Betätigungsmechanismus für Druckguss-Ventilelemente. Die einzelnen Ventilstifte einer Düsengruppe sind an einer gemeinsamen Ventilstiftplatte festgelegt, die randseitig mit Führungsbuchsen versehen ist und auf parallel zu den Ventilstiften verlaufenden Führungsbolzen auf- und abgleiten kann. Auf der Ventilstiftplatte sind zwei Betätigungsstäbe befestigt, die seitlich mehrere Gleitblöcke tragen. Letztere greifen in schräg verlaufende Nuten zweier Nockenelemente ein, die längsverschieblich zwischen der oberen Werkzeugplatte und je einer Halteplatte gelagert sind.

Um die Reibung der Nockenstäbe zu reduzieren, sind diese oben und unten mit je einer Reihe Wälzlager versehen. Die Umsetzung der Stellbewegung in eine Hubbewegung der Ventilstiftplatte erfolgt jedoch über gewöhnliche Gleitblöcke, die in den Schrägnuten der Nockenelemente einem hohen Verschleiß ausgesetzt sind. Darüber hinaus wird durch die aufgesetzten Betätigungsstäbe und die zusätzlich notwendigen Halteplatten die Bauhöhe der Betätigungsvorrichtung relativ groß, so daß der Einsatz der Betätigungsvorrichtung, insbesondere in kleineren Werkzeugen begrenzt ist.

JPH 0 542 568 A offenbart eine Düsenspitze für ein Spritzgießwerkzeug mit einem auf der Düsenspitze längsverschieblich gelagerten Metallring, der einen Rückfluss des zu verarbeitenden Materials verhindern soll. Der Metallring ist mit einer Beschichtung aus Diamant oder einem diamantähnlichen Material versehen.

US 6 461 143 B1 beschreibt ein mehrteiliges Spritzgießwerkzeug zur Herstellung von plattenförmigen Kunststoffobjekten. Ein längsverschieblicher Teil des Spritzgießwerkzeus ist nadelförmig ausgebildet und mit radial nach außen weisenden Rippen in einem Kanal des Werkzeugs längsverschieblich gelagert. Die Flächen der Rippen und des Kanals sind mit Titannitrid oder einem diamantähnlichen Material beschichtet.

Die VDI-Richtlinie 2840 fasst Grundlagen, Schichttypen und Eigenschaften von Kohlenstoffschichten zusammen, die mit den Verfahren der Vakuumbeschichtungstechnik (PVD oder CVD) abgeschieden werden.

VDI-Richtlinie 3825 offenbart Oberflächen/Beschichtungen PVD- oder CVDbeschichteter Werkzeuge und Bauteile, insbesondere Hartstoffbeschichtungen.

EP 1 025 974 A2 offenbart eine Bestätigungsvorrichtung mit einer Hubplatte für Ventilnadeln, auf deren Rückseite Betätigungsleisten aufgebracht sind. Letztere liegen gegenüber jeweils einer Steuerschiene, die mittels Wälzlagern längsverschieblich im Werkzeug gelagert sind. An den Betätigungsleisten sind Gleitelemente befestigt, die in schrägen Nuten, die in den Steuerschienen ausgebildet sind, gleiten.

Bekannt ist ferner ein Nadelverschlusssystem mit der Bezeichnung HPS III-NV der EWIKON Heisskanalsysteme GmbH & Co. KG. Dieses System hat eine Hubplatte, an der wenigstens zwei Verschlussnadeln zweier Nadelverschlussdüsen festlegbar sind, wobei die Hubplatte zwischen zwei in einer ersten Richtung längsverschieblich gelagerten Steuerschienen in einer zu der ersten Richtung quer verlaufenden zweiten Richtung bewegbar ist. Wenigstens zwei Gleitelemente, setzen eine Bewegung der Steuerschienen entlang der ersten Richtung in eine Hubbewegung der Hubplatte in der zweiten Richtung um, wobei die Hubplatte längsseits zwischen den Steuerschienen angeordnet ist, und wobei die Gleitelemente zwischen der Hubplatte und den Steuerschienen in zu der ersten Richtung und der zweiten Richtung schräg verlaufenden Nuten angeordnet sind. Relativ zueinander bewegte und somit verschleißgefährdete Bauteile, insbesondere die Steuerschienen und/oder die Gleitelemente, sind zumindest teilweise aus einem selbstschmierenden Material gefertigt.

Ziel der Erfindung ist es, eine kompakte Betätigungsvorrichtung für Spritzgießwerkzeuge mit Nadelverschlußdüsen zu schaffen, die eine wartungsfreie und dauerhaft zuverlässige Betätigung aller Ventilnadeln ermöglicht, die innerhalb der Vorrichtung individuell justierbar sein sollen. Die Betätigungsvorrichtung soll ferner mit einfachen Mitteln kostengünstig aufgebaut und leicht zu handhaben sein.

Hauptmerkmale der Erfindung sind im kennzeichnenden Teil der Ansprüche 1 und 27 angegeben. Ausgestaltungen sind Gegenstand der Ansprüche 2 bis 26 und 28 bis 32.

Bei einer Betätigungsvorrichtung für Verschlußnadeln in Spritzgießwerkzeugen mit Nadelverschlußdüsen, mit einem Hubelement, an dem wenigstens zwei Verschlußnadeln zweier Nadelverschlußdüsen festlegbar sind und das zwischen zwei in einer ersten Richtung längsverschieblich gelagerten Steuerschienen in einer zu der ersten Richtung quer verlaufenden zweiten Richtung bewegbar ist, und mit wenigstens zwei Gleitelementen, die eine Bewegung der Steuerschienen entlang der ersten Richtung in eine Hubbewegung des Hubelements in der zweiten Richtung umsetzen, wobei das Hubelement längsseits zwischen den Steuerschienen angeordnet ist, und wobei die Gleitelemente zwischen dem Hubelement und den Steuerschienen in zu der ersten Richtung und der zweiten Richtung schräg verlaufenden Nuten angeordnet sind, sieht die Erfindung vor, dass die Steuerschienen und/oder die Gleitelemente, als relativ zueinander bewegte und somit verschleißgefährdete Bauteile, zumindest teilweise aus einem diamantartigen Material gefertigt oder zumindest teilweise mit einem selbstschmierenden oder einem diamantartigen Material beschichtet sind. Das Adjektiv "diamantartig" bezieht sich hierbei auf Materialien mit einer sehr hohen, diamantähnlichen Härte, um eine entsprechende Verschleißfestigkeit der Bauteile zu gewährleisten. Die Erfindung sieht weiter vor, dass die Gleitelemente seitlich in das Hubelement eingelassen sind.

Durch die Festlegung der Ventilnadeln an einer gemeinsamen Hubplatte ist sichergestellt, dass alle Ventilnadeln stets synchron bewegt und mit gleicher Schließkraft beaufschlagt werden. Die in den Schrägnuten der Steuerschienen geführten und von Querkräften belasteten Gleitelemente aus diamantartigem Material sorgen für eine dauerhaft zuverlässige Betätigung aller Ventilnadeln, weil die Reibungskräfte innerhalb der Nuten auf ein Minimum herabgesetzt sind. Das gleiche gilt, wenn die Gleitelemente zumindest teilweise, insbesondere abschnittsweise mit einem selbstschmierenden Material beschichtet sind, oder wenn sie alternativ zumindest teilweise mit einem diamantartigen Material beschichtet sind. Damit sich die Gleitelemente nicht verdrehen bzw. verkanten können, sind sie seitlich in das Hubelement eingelassen.

Die Erfindung sieht weiter vor, daß die Länge der Gleitelemente größer ist als die Dicke des Hubelements. Dieses wird mithin stets präzise geführt, wobei innerhalb der Schrägnuten keine Punktlasten auftreten.

Das Hubelement ist in der zweiten Richtung zwangsgeführt, wobei es bevorzugt zwischen zwei Anschlägen angeordnet ist. Diese sind zumindest teilweise mit einem selbstschmierenden Material beschichtet, so dass sich die Reibungskräfte zwischen dem Hubelement und den Anschlägen deutlich vermindern. Alternativ können die Anschläge auch zumindest teilweise aus einem diamantartigen Material hergestellt oder mit einem solchen beschichtet sein.

Um die Betätigungsvorrichtung und die Ventilnadeln individuell an das Werkzeug anpassen zu können, sind die Ventilnadeln entlang der zweiten Richtung relativ zu dem Hubelement justierbar ausgebildet. Um darüber hinaus eine stets synchrone Stellbewegung bei gleichzeitigem Bewegungsausgleich gewährleisten zu können, sind die Ventilnadeln gemäß einem weiteren Aspekt der Erfindung axialfest und radial schwimmend an der Hubplatte festlegbar.

Das Hubelement hat zwischen den Ventilnadeln wenigstens eine Ausnehmung zur Durchführung eines Strömungskanals, eines Verteilerarms o.dgl.

Eine andere Ausführungsform der Erfindung sieht vor, daß die Steuerschienen mit einem Antrieb verbunden sind, insbesondere über ein gemeinsames Schubelement, das zusammen mit den Steuerschienen einen U-förmigen Rahmen bildet. Die Steuerschienen und das Schubelement sind kraft- und/oder formschlüssig miteinander verbunden. Sie können aber auch bei Bedarf einstückig sein.

Um eine präzise Führung der Steuerschienen zu erreichen, sind diese zwischen Führungselementen gleitgeführt Diese sind beispielsweise als Führungsschienen ausgebildet, die an oder in einer Aufspannplatte befestigt sind. Dabei weisen die Steuerschienen an ihren den Führungsschienen zugewandten Seitenflächen Gleitleisten auf, die in Nuten der Führungsschienen gleitgeführt sind. Um auch hier die Reibungskräfte zwischen den relativ zueinander bewegten Bauteilen zu vermindern, sind die Gleitleisten zumindest teilweise mit einem selbstschmierenden Material beschichtet. Alternativ können die relativ zueinander bewegten Bauteile auch zumindest teilweise aus einem diamantartigen Material hergestellt oder mit einem solchen beschichtet sein, um den durch die Relativbewegung verursachten Verschleiß zu verringern.

Eine andere Ausführungsform der Erfindung sieht vor, daß die Führungselemente Führungsplatten sind. Diese sind am Werkzeug und an den Steuerschienen befestigt und im Bereich der Gleitflächen mit Gleitelementen versehen. Die Führungsplatten und/oder die Gleitelemente sind dabei zumindest teilweise mit einem selbstschmierenden Material beschichtet, was sich günstig auf die Gleiteigenschaften auswirkt.

Von besonderer Bedeutung ist, daß das selbstschmierende Material ein Lagermetall ist, beispielsweise eine Blei-, Zinn-, Aluminium- oder Kupferlegierung oder ein Sintermetall. Bevorzugt verwendet man Bronze oder Sinter-Bronze.

Wird ein diamantartiges Material anstelle eines selbstschmierenden Materials verwendet, so sind die Oberflächen des diamantartigen Materials vorteilhaft poliert, wodurch sich eine spiegelartige Fläche mit geringer Oberflächenrauhigkeit und geringem Reibkoeffizienten ergibt. Entsprechend kann der durch die Relativbewegung der entsprechenden Bauteile verursachte Verschleiß weiter verringert werden.

Zudem sind die aufgrund einer Relativbewegung verschleißenden Bauteile, insbesondere die Gleitelemente, bevorzugt austauschbar angeordnet, so dass sie im verschlissenen Zustand jederzeit durch neue Bauteile ersetzt werden können.

Eine besondere Ausführungsform der Erfindung sieht vor, daß die Betätigungsvorrichtung in einem Spritzgießwerkzeug ausgebildet ist, insbesondere in oder an einer Aufspannplatte. Letztere ist hierzu mit einer Vertiefung zur Aufnahme der Betätigungsvorrichtung versehen, was die Montage vereinfacht.

Wichtige Vorteile ergeben sich, wenn die Betätigungsvorrichtung bündig mit der Aufspannplatte abschließt. Die Bauhöhe des Spritzgießwerkzeugs wird dadurch verringert. Bei Bedarf lassen sich wenigstens zwei Betätigungsvorrichtungen parallel nebeneinander anordnen, wobei beide einen gemeinsamen Antrieb aufweisen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Draufsicht auf eine Betätigungsvorrichtung für Spritzgießwerkzeuge,
- Fig. 2: eine Schnittansicht der Betätigungsvorrichtung von Fig. 1entlang der Linie A-A,
- Fig. 3: eine Schnittansicht der Betätigungsvorrichtung von Fig. 1 entlang der Linie B-B und
- Fig. 4: eine Schnittansicht einer anderen Ausführungsform einer Betätigungsvorrichtung für Spritzgießwerkzeuge.

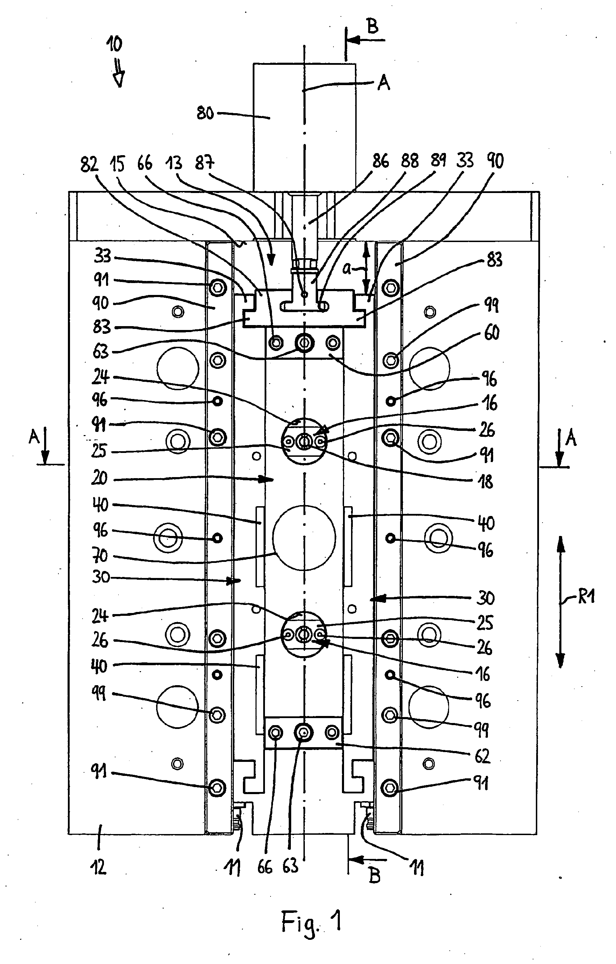

Die in Fig. 1 allgemein mit 10 bezeichnete Betätigungsvorrichtung ist für das Betätigen mehrerer Verschlußnadeln 16 in einer (nicht weiter dargestellten) Spritzgießvorrichtung vorgesehen. Letztere dient zur Herstellung von Formteilen aus einer fließfähigen Masse, beispielsweise einer Kunststoffschmelze. Hierzu sind unter einer (nicht gezeigten) Verteilerplatte mehrere (ebenfalls nicht dargestellte) Nadelverschlußdüsen angeordnet. Diese führen die zu verarbeitende Kunststoffschmelze einem trennbaren (gleichfalls nicht gezeigten) Formeinsatz zu, dessen Angußöffnungen von den Verschlußnadeln 16 periodisch geöffnet und geschlossen werden.

Über der Verteilerplatte sitzt eine Aufspannplatte 12, die zur Aufnahme der Betätigungsvorrichtung 10 mit einer rechteckigen Vertiefung oder Ausnehmung 13 versehen ist. Über Anschlüsse 11 lassen sich Schlauch- oder Rohrleitungen für ein Strömungsmedium anschließen, das in Bohrungen 17 die Aufspannplatte 12 durchströmt. Dadurch wird sowohl diese als auch die Betätigungsvorrichtung 10 stets optimal temperiert, insbesondere gekühlt, was sich günstig auf das Betriebsverhalten auswirkt.

Um die Verschlußnadeln 16 der Nadelverschlußdüsen simultan betätigen zu können, ist ein Hubelement 20 vorgesehen, an dem in der Ausführungsform von Fig. 1 zwei Verschlußnadeln 16 befestigt sind. Das Hubelement 20 ist bevorzugt als rechteckige Platte ausgebildet, die parallel zur Aufspannplatte 12 liegt und längsseits zwischen zwei verschieblich gelagerten Steuerschienen 30 angeordnet ist. Stirnseitig sitzt die Platte 20 zwischen zwei ortsfesten Anschlägen 60, 62, die mittels Schrauben 63 in der Vertiefung 13 der Aufspannplatte 12 fixiert sind. Zwei Paßstifte 66 sorgen jeweils für eine präzise Ausrichtung der im Querschnitt bevorzugt rechteckigen Anschläge 60, 62, wobei die Stifte 66 fest im Boden 14 der Aufspannplatte 12 fixiert sind und von (nicht näher bezeichneten) Bohrungen in den Anschlägen 60, 62 paßgenau aufgenommen werden.

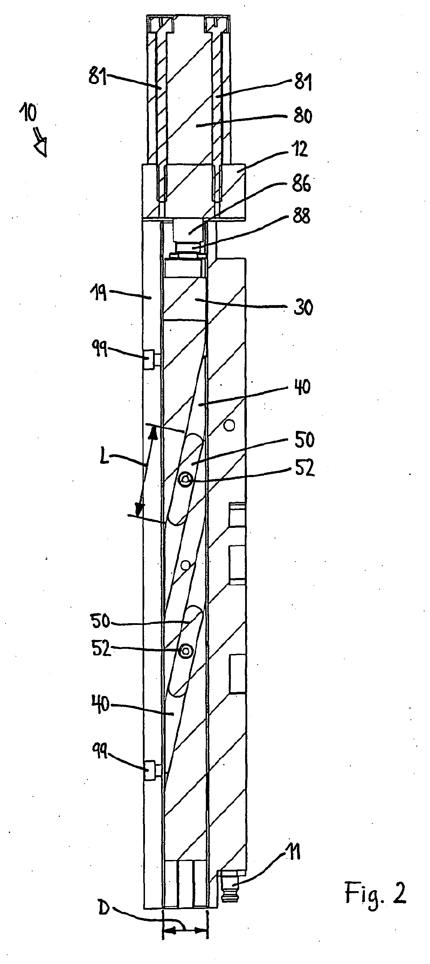

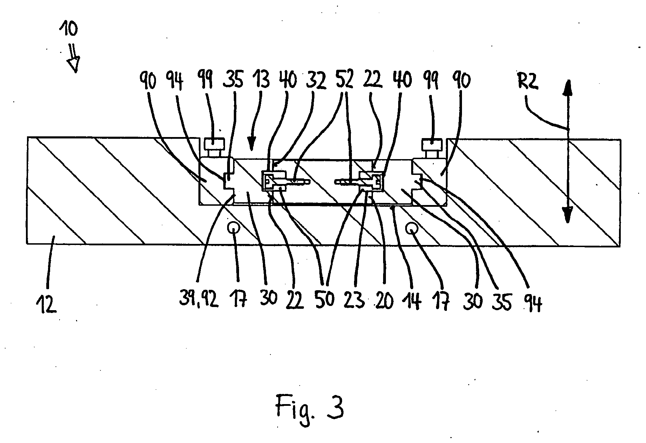

Die Hubplatte 20 trägt seitlich je zwei Gleitelemente 50, die in den Steuerschienen 30 parallel gleitgeführt sind (Fig. 2 und 3). Letztere sind dabei an ihren der Hubplatte 20 zugewandten Seitenflächen 32 mit je zwei schräg zur Aufspannplatte 12 verlaufenden Nuten 40 versehen, welche die Gleitelemente 50 bis auf ein geringes Bewegungsspiel aufnehmen.

Die Steuerschienen 30 sind innerhalb der Vertiefung 13 zwischen zwei ortsfesten Führungsschienen 90 in einer ersten Richtung R1 parallel zur Aufspannplatte 12 längsverschieblich angeordnet und über ein gemeinsames Schubelement 82 und ein Adapterstück 86 mit einem Antrieb 80 verbunden. Dieser ist beispielsweise mittels Schrauben 81 außen an der Aufspannplatte 12 befestigt, wobei das Adapterstück 86 durch eine seitliche (nicht näher bezeichnete) Bohrung oder Ausnehmung in der Aufspannplatte 12 hindurchgeführt ist. Der Antrieb 80 kann ein elektrischer, pneumatischer oder hydraulischer Stellantrieb oder -motor sein, der bevorzugt von einer (gleichfalls nicht gezeigten) Steuerelektronik betätigt wird.

Das Schubelement 82 hat zwei stufenförmige Enden 83, die derart mit den Steuerschienen 30 in Eingriff stehen, daß in der ersten Richtung R1 eine stets zugfeste Verbindung entsteht, die jedoch senkrecht dazu lösbar ist. Die Steuerschienen 30 weisen hierzu hakenförmige Enden 33 auf, welche die stufenförmigen Enden 83 des Schubelements 82 formschlüssig umgreifen. Dadurch können die Elemente 30, 82 bei der Montage der Betätigungsvorrichtung 10 werkzeuglos ineinandergesteckt werden, was die Handhabung vereinfacht und sich günstig auf die Montagekosten auswirkt. Zudem lassen sich die Bauteile 30, 82 jederzeit rasch austauschen, wenn beispielsweise eine längere und/oder breitere Hubplatte 20 Verwendung findet. Im Einbauzustand sind jedoch das Schubelement 82 und die Steuerschienen 30 in Betätigungsrichtung R1 stets fest miteinander gekoppelt.

Die Verbindung zwischen dem Schubelement 82 und dem Adapterstück 86 bildet ein im Querschnitt T-förmiger Kulissenstein 88, der mittels eines Spannstifts 87 mit dem Adapterstück 86 verbunden ist und der - ebenfalls ohne Werkzeug - formschlüssig in das Schubelement 82 eingesteckt wird. Letzteres ist hierzu mit einer formgleichen Aussparung 89 versehen.

Die Führungsschienen 90 liegen seitlich in der Vertiefung 13 der Adapterplatte 12. Sie sind mittels Schrauben 91 am Boden 14 der Vertiefung 13 befestigt und an ihren den Steuerschienen 30 zugewandten Seitenflächen 92 mit je einer durchgehenden, parallel zur Adapterplatte 12 verlaufenden Führungsnut 94 versehen. Jede Führungsnut 94 nimmt mit geringem Bewegungsspiel eine Gleitleiste 35 auf, die an einer den Führungsschienen 90 zugewandten Seitenfläche 39 der Steuerschiene 30 ausgebildet ist. Paßstifte 96 sorgen für eine präzise Ausrichtung der Führungsschienen 90 innerhalb der Vertiefung 13. Sie sind fest im Boden 14 der Aufspannplatte 12 eingesteckt und werden von (nicht näher bezeichneten Bohrungen) in den Führungsschienen 90 paßgenau aufgenommen.

Man erkennt in Fig. 1, daß die Steuerschienen 30 und das Schubelement 82 einen U-förmigen Rahmen bilden, der die Hubplatte 20 und die Anschläge 60, 62 mit geringem Bewegungsspiel seitlich umfaßt und der außen zwischen den Führungsschienen 90 gleitgeführt ist. Bewegt der Antrieb 80 den Rahmen 30, 82 in der ersten Richtung R1 periodisch hin- und her, wird die zwischen den Anschlägen 60, 62 zwangsgeführte Hubplatte 20 von den in den Schrägnuten 40 der Steuerschienen 30 geführten Gleitelemente 50 in einer zweiten Richtung R2 senkrecht zur Richtung R1 auf und ab bewegt. Die Hubplatte 20 führt mithin zusammen mit den daran festgelegten Verschlußnadeln 16 eine Hubbewegung aus, wobei alle Verschlußnadeln 16 stets zeitgleich und mit gleicher Schließkraft betätigt werden.

Damit die Hubplatte 20 eine definierte und stets reproduzierbare Hubbewegung ausführen kann, ist die Bewegung des Schubelements 82 in der ersten Richtung R1 durch Anschläge begrenzt. Einen ersten Anschlag bildet eine Stirnwandung 15 der Vertiefung 13, während der dem Antrieb 80 zugewandte Anschlag 60 einen zweiten Anschlag bildet. Der Abstand a zwischen der Stirnwandung 15 und dem Anschlag 60 gibt den Stellweg für das Schubelement 82 und damit für die Steuerschienen 30 vor, die mithin zwischen wenigstens zwei definierten Positionen hin- und her bewegbar sind. Die Hubplatte 20 führt - abhängig von der Schräglage der Nuten 40 und den Gleitelementen 50 - eine entsprechend definierte Hubbewegung aus, wobei man über den Antrieb 80 auch gezielt Zwischenpositionen anfahren kann, wenn beispielsweise die Verschlußnadeln 16 in verschiedene Schließ- und Öffnungspositionen zu bringen sind.

Die Steckverbindungen zwischen den Bauteilen 30, 82 und 82, 86/89 haben den Vorteil, daß die z.B. teilweise vormontierte Betätigungsvorrichtung 10 einfach von oben in die Ausnehmung 13 der Anschlagplatte 12 eingesetzt werden kann. Lediglich die Anschläge 60, 62 sind bereits in der Vertiefung 13 eingesetzt. Die gesamte Betätigungsvorrichtung 10 besteht mithin aus nur wenigen Teilen mit einfacher Geometrie. Sie ist äußerst einfach zu montieren. Umgekehrt lassen sich das Hubelement 20, die Steuerschienen 30, das Schubelement 82 und die Führungsschienen 90 jederzeit rasch und bequem aus der Aufspannplatte 12 entnehmen, um beispielsweise defekte Bauteile auszuwechseln, um die Verschlußnadeln 16 wechseln zu können oder um sonstige Wartungsarbeiten durchzuführen.

Die Gleitelemente 50 der Hubplatte 20 sind bevorzugt längliche Paßfedern, die im gleichen Winkel zur Aufspannplatte 12 verlaufen wie die Nuten 40 der Steuerschienen 30. Sie sind ferner in die Seitenflächen 22 der Hubplatte 20 eingelassen und jeweils mittels einer oder zwei Schrauben 52 darin gesichert. Die Hubplatte 20 ist hierzu mit entsprechenden Ausnehmungen 23 versehen, welche die Paßfedern 50 formschlüssig aufnehmen.

Um eine gute Führung der parallel zueinander angeordneten Paßfedern 50 in den Nuten 40 der Steuerschienen 30 zu gewährleisten und um eine hohe Kraftübertragung zu ermöglichen, ist die Länge L jeder Paßfeder 50 größer als die Dicke D der Hubplatte 20. Die Steuerschienen 30 finden dadurch eine relativ große Angriffsfläche, um die Hubplatte 20 in eine Auf- und Abbewegung zu bringen. Auch dies wirkt sich günstig auf die Standzeiten aus.

Die Gleitleisten 35 sind bevorzugt mittels (nicht gezeigter) Schrauben an den Steuerschienen 30 festzulegen.

Die Betätigungsvorrichtung 10 kommt nahezu ohne Schmiermittel aus, was sich günstig auf die Wartungsintervalle auswirkt. Die Betätigungsvorrichtung 10 gewährleistet eine dauerhaft zuverlässige Hubbewegung aller Ventilnadeln 16.

In einer anderen wichtigen Ausführungsform der Erfindung ist vorgesehen, daß die Gleit- und Führungselemente 35, 50, 60, 62 aus Stahlmaterial gefertigt sind und eine (nicht näher bezeichnete) Beschichtung aus einem selbstschmierenden Material tragen. Auch hierdurch lassen sich die Herstellkosten reduzieren bei gleichzeitig wartungsfreundlicher Ausgestaltung der Betätigungsvorrichtung. Die Bauteile 35, 50, 60, 62 können vollständig mit einem selbstschmierenden Material beschichtet sein oder lediglich im Bereich ihrer Kontakt- bzw. Reibflächen. Durch den einfachen, steckbaren Aufbau der Betätigungsvorrichtung 10 lassen sich Bauteile, deren Beschichtung verbraucht oder beschädigt ist, rasch und bequem austauschen.

Alternativ können einander berührende und relativ zueinander bewegte Bauteile zumindest teilweise aus einem diamantartigen Material hergestellt oder zumindest teilweise mit einem solchen beschichtet sein. Aufgrund des diamantartigen Materials erhalten die entsprechenden Bauteile eine sehr hohe Verschleißfestigkeit und damit eine lange Lebensdauer. Bevorzugt sind die Gleitoberflächen, entlang denen eine Relativbewegung stattfindet, zudem poliert, um die Oberflächenrauhigkeit und entsprechend den Reibkoeffizienten herabzusetzen.

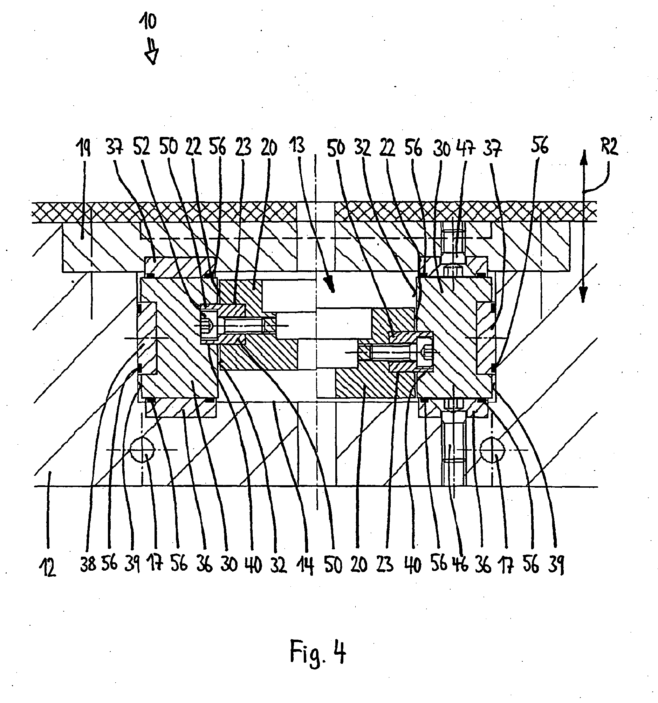

Die Ausführungsform von Fig. 4 sieht vor, daß jede Führungsschiene 30 zwischen drei Führungsplatten 36, 37, 38 verschieblich gelagert ist. Zwei dieser Platten 36 sind mittels Schrauben 46 am Boden 14 der Ausnehmung 13 befestigt, während zwei obere Platten 37 mittels Schrauben 47 an der Abdeckplatte 19 fixiert sind. Zwei weitere Platten 38 sind jeweils in die Seitenfläche 39 der Führungsschienen 30 eingelassen, die hierzu mit (nicht näher bezeichneten) Nuten versehen ist. Die seitlichen Platten 38 und die Führungsschienen 30 sind fest miteinander verschraubt.

Wie Fig. 4 weiter zeigt, sind die oberen und unteren Platten 36, 37 an ihren der Führungsschiene 30 zugewandten Gleit- bzw. Reibflächen mit Gleitelementen 56 versehen. Derartige Gleitelemente 56 sind auch in die der Aufspannplatte 12 zugewandten Außenflächen der seitlichen Führungsplatten 38 eingebracht. Die Führungsplatten 36, 37, 38 haben den Vorteil, daß die Führungsschienen 30 stets präzise und zuverlässig innerhalb der Aufspannplatte 12 geführt sind, während die Gleitelemente 56 für eine geringe Reibung und einen entsprechend geringen Verschleiß sorgen.

Man kann die Gleitflächen der Platten 36, 37, 38 aber auch - ebenso wie die Gleit- und Führungselemente 35, 50, 60, 62 - mit einer Beschichtung aus einem selbstschmierenden Material belegen. Alternativ kann für die genannten Bauteile auch ein diamantartiges Material verwendet werden, wobei die Gleitflächen vorteilhaft aus den zuvor bereits genannten Gründen poliert sein können.

Das selbstschmierende Materialkann eine Blei-, Zinn-, Aluminium- oder Kupferlegierung oder ein Sintermetall sein. Wichtig ist, daß das Material selbstschmierende Eigenschaften hat, um die relativ hohe Reibung an den Gleitflächen zu verringern. Gleichzeitig muß das Material widerstandsfähig sein, damit die selbstschmierenden Eigenschaften möglichst lange erhalten bleiben.

Die Verschlußnadeln 16 sind mittig zur Längsachse A von oben in die Hubplatte 20 eingesetzt, die hierzu mit (nicht näher bezeichneten) Bohrungen versehen ist. Im Bereich der Hubplatte 20 weist jede Nadel 16 endseitig ein Gewinde auf, das in eine (nicht sichtbare) im Wesentlichen rechteckige Halteplatte eingeschraubt ist. Eine Justiermutter 18 fixiert die Nadel 16 gegenüber der Halteplatte, die flach auf der Hubplatte 20 aufliegt. Auf diese Weise sind die Nadeln 16 entlang der zweiten Richtung R2 relativ zur Hubplatte 20 individuell in der Länge verstellbar.

Jede Halteplatte liegt in einer (ebenfalls nicht gezeigten) Aussparung, deren Höhe nahezu exakt der Höhe der Halteplatte entspricht und deren Außenabmessungen größer sind als die der Halteplatte, so daß sich diese innerhalb der Aussparung radial bewegen kann. Eine mittels Schrauben 26 an der Hubplatte 20 befestigte Abdeckplatte 25 sichert die Halteplatte in der Aussparung. Die Halteplatte ist mithin in Axialrichtung der Verschlußnadeln 16 mit geringstmöglichem Bewegungsspiel zwischen der Hubplatte 20 und der Abdeckplatte 25 festgelegt, so daß sämtliche Nadeln 16 stets präzise in Schließstellung gebracht und wieder geöffnet werden können. In Radialrichtung hingegen sind die Halteplatten schwimmend gelagert, so daß Auslenkungen der Nadeln 16 innerhalb der Heißkanaldüsen während der Hubbewegungen ausgeglichen werden. Durch die rechteckige Gestalt der Halteplatte sind die Nadeln 16 zudem drehfest gegenüber der Hubplatte 20 angeordnet.

Die Nadeln 16 ragen mit ihren Justiermuttern 18 durch die Abdeckplatten 25 hindurch. Damit die Nadelenden nicht zu weit über die Hubplatte 20 hinausstehen, liegen die Halteplatten und die Abdeckplatten 25 in Vertiefungen 24. Die Bauhöhe der Betätigungsvorrichtung 10 bleibt dadurch äußerst gering.

Mittig zwischen den Vertiefungen 24 ist in der Hubplatte 20 eine zentrische Ausnehmung 70 eingebracht, die sich mit gleichem Innendurchmesser in der Aufspannplatte 12 fortsetzt. Die Ausnehmung 70 dient der Durchführung eines Strömungskanals, eines Verteilerarms o.dgl., insbesondere einer (nicht dargestellten) Maschinendüse oder einer Angußbuchse, welche die unterhalb der Aufspannplatte 12 liegende Verteilerplatte mit der zu verarbeitenden Kunststoffmasse versorgt. Der (nicht näher bezeichnete) Innendurchmesser der Ausnehmung 70 ist so bemessen, daß sich die Hubplatte 20 ungehindert bewegen kann.

Den Abschluß der Betätigungsvorrichtung 10 bildet eine Abdeckplatte 19 (siehe Fig. 2), die flach auf den Führungsschienen 90 aufliegt und an diesen mittels Schrauben 99 gesichert werden. Wie in Fig. 3 erkennbar, schließt die Abdeckplatte 19 bündig mit der Oberseite der Aufspannplatte 12 ab, so daß die Betätigungsvorrichtung 10 nicht über die Aufspannplatte 12 hinausragt. Die Vorrichtung 10 ist vielmehr nahezu vollständig in der Aufspannplatte 12 integriert, was sich äußerst günstig auf die Bauhöhe des Werkzeugs auswirkt. Lediglich der Antrieb 80 sitzt außen seitlich an der Aufspannplatte 12, was jedoch keine Auswirkung auf deren Bauhöhe hat.

In der Ausführungsform von Fig. 1 sind an dem Hubelement 20 zwei Verschlußnadeln 16 einer Düsengruppe befestigt. Man kann die Zahl der Verschlußnadeln 16 jedoch ohne weiteres erhöhen, indem die Hubplatte 20 entsprechend länger oder breiter ausgebildet wird. Die Verschlußnadeln 16 müssen dabei nicht zwingend auf der Längsachse A angeordnet sein. Für eine optimale Ausnutzung der gegebenen Werkzeugfläche können mehrere Formeinsätze und damit mehrere Nadelverschlußdüsen sehr eng nebeneinanderliegen, wobei die Düsen bei Bedarf zu Düsengruppen zusammengefaßt sind.

Denkbar ist auch die Anordnung von zwei Betätigungsvorrichtungen 10 seitlich nebeneinander. Die Aufspannplatte 12 wird hierzu mit zwei nebeneinanderliegenden Vertiefungen 13 oder mit einer gemeinsamen Vertiefung versehen, so daß die Steuerschienen 30 und die Führungsschienen 90 der einzelnen Betätigungsvorrichtungen 10 parallel nebeneinanderliegen.

Die Erfindung ist nicht auf eine der vorbeschriebenen Ausführungsformen beschränkt, sondern in vielfältiger Weise abwandelbar. So können die Steuerschienen 30 und das Schubelement 82 auch kraftschlüssig miteinander verbunden sein, beispielsweise durch (nicht gezeigte) Rastelemente. Man kann die Steuerschienen 30 und das Schubelement 82 aber auch einstückig ausbilden, so daß der U-förmige Rahmen als Ganzes montiert bzw. demontiert werden kann.

Die Gleit- und Führungselemente 35, 36, 37, 38, 50, 60, 62 müssen nicht unmittelbar mit dem selbstschmierenden Material oder alternativ mit dem diamantartigen Material beschichtet sein. Man kann das entsprechende Material auch auf einem Zwischenträger, z.B. einem plattenförmigen Tragelement, aufbringen und dieses an den Reibflächen der Gleit- und Führungselemente 35, 36, 37, 38, 50, 60, 62 festlegen, beispielsweise durch Verschrauben, Verrasten oder Verkleben.

**Bezugszeichenliste**

| | | | |
|---|---|---|---|
| A | Längsachse | 40 | Nuten |
| a | Abstand | 46 | Schrauben |
| D | Dicke | 47 | Schrauben |
| L | Länge | | |
| R1 | ersten Richtung | 50 | Gleitelement / Paßfeder |
| R2 | zweite Richtung | 52 | Schraube |
| | | 56 | Gleitelement |
| 10 | Betätigungsvorrichtung | | |
| 11 | Anschlüsse | 60 | Anschlag |
| 12 | Aufspannplatte | 62 | Anschlag |
| 13 | Vertiefung / Ausnehmung | 63 | Schraube |
| 14 | Boden | 66 | Paßstift |
| 15 | Stirnwandung | 70 | Ausnehmung |
| 16 | Verschlußnadel | | |
| 17 | Bohrung | 80 | Antrieb |
| 18 | Justiermutter | 81 | Schraube |
| 19 | Abdeckplatte | 82 | Schubelement |
| | | 83 | stufenförmiges Ende |
| 20 | Hubelement / Hubplatte | 86 | Adapterstück |
| 22 | Seitenfläche | 87 | Spannstift |
| 23 | Ausnehmungen | 88 | Kulissenstein |
| 24 | Vertiefung | 89 | Aussparung |
| 25 | Abdeckplatte | | |
| 26 | Schraube | 90 | Führungsschiene |
| | | 91 | Schraube |
| 30 | Steuerschiene | 92 | Seitenfläche |
| 32 | Seitenfläche | 94 | Führungsnut |
| 33 | hakenförmiges Ende | 96 | Paßstift |
| 35 | Gleitleiste | 99 | Schraube |
| 36 | Führungsplatte | | |
| 37 | Führungsplatte | | |
| 38 | Führungsplatte | | |
| 39 | Seitenfläche | | |

## Patentansprüche

1. Betätigungsvorrichtung (10) für Verschlussnadeln in Spritzgießwerkzeugen
a) mit Nadelverschlussdüsen,
b) mit einem Hubelement (20), an dem wenigstens zwei Verschlussnadeln (16) zweier Nadelverschlussdüsen festlegbar sind und das zwischen zwei in einer ersten Richtung (R1) längsverschieblich gelagerten Steuerschienen (30) in einer zu der ersten Richtung (R1) quer verlaufenden zweiten Richtung (R2) bewegbar ist, und
c) mit wenigstens zwei Gleitelementen (50), die eine Bewegung der Steuerschienen (30) entlang der ersten Richtung (R1) in eine Hubbewegung des Hubelements (20) in der zweiten Richtung (R2) umsetzen,
d) wobei das Hubelement (20) längsseits zwischen den Steuerschienen (30) angeordnet ist, und
e) wobei die Gleitelemente (50) zwischen dem Hubelement (20) und den Steuerschienen (30) in zu der ersten Richtung (R1) und der zweiten Richtung (R2) schräg verlaufenden Nuten (40) angeordnet sind, **dadurch gekennzeichnet,**
f) **dass** die Steuerschienen (30) und/oder die Gleitelemente (50), als relativ zueinander bewegte und somit verschleißgefährdete Bauteile, zumindest teilweise aus einem diamantartigen Material gefertigt oder zumindest teilweise mit einem selbstschmierenden oder einem diamantartigen Material beschichtet sind, und
g) **dass** die Gleitelemente (50) seitlich in das Hubelement (20) eingelassen sind.

2. Betätigungsvorrichtung nach Anspruch 1 **dadurch gekennzeichnet, dass** die Länge (L) der Gleitelemente (50) größer ist als die Dicke (D) des Hubelements (20).

3. Betätigungsvorrichtung nach einem der Ansprüche 1 oder 2, **dadurch gekennzeichnet, dass** das Hubelement (20) in der zweiten Richtung (R2) zwangsgeführt ist.

4. Betätigungsvorrichtung nach Anspruch 3, **dadurch gekennzeichnet, dass** das Hubelement (20) zwischen zwei Anschlägen (60, 62) angeordnet ist.

5. Betätigungsvorrichtung nach Anspruch 3 oder 4, **dadurch gekennzeichnet, dass** die Anschläge (60, 62) zumindest teilweise aus einem selbstschmierenden oder aus einem diamantartigen Material gefertigt oder zumindest teilweise mit einem selbstschmierenden oder einem diamantartigen Material beschichtet sind.

6. Betätigungsvorrichtung nach einem der Ansprüche 1 bis 5, **dadurch gekennzeichnet, dass** die Ventilnadeln (16) entlang der zweiten Richtung (R2) relativ zu dem Hubelement (20) justierbar sind.

7. Betätigungsvorrichtung nach einem der Ansprüche 1 bis 6, **dadurch gekennzeichnet, dass** die Ventilnadeln (16) axialfest und radial schwimmend an der Hubplatte (20) festlegbar sind.

8. Betätigungsvorrichtung nach einem der Ansprüche 1 bis 7, **dadurch gekennzeichnet, dass** das Hubelement (20) wenigstens eine Ausnehmung (70) zur Durchführung eines Strömungskanals, eines Verteilerarms o.dgl. des Spritzgießwerkzeugs aufweist.

9. Betätigungsvorrichtung nach einem der Ansprüche 1 bis 8, **dadurch gekennzeichnet, dass** die Steuerschienen (30) mit einem Antrieb (80) verbunden sind.

10. Betätigungsvorrichtung nach Anspruch 9, **dadurch gekennzeichnet, dass** die Steuerschienen (30) über ein gemeinsames Schubelement (82) mit dem Antrieb (80) verbunden sind.

11. Betätigungsvorrichtung nach Anspruch 9 oder 10, **dadurch gekennzeichnet, dass** die Steuerschienen (30) und das Schubelement (82) einen U-förmigen Rahmen bilden.

12. Betätigungsvorrichtung nach einem der Ansprüche 9 bis 11, **dadurch gekennzeichnet, dass** die Steuerschienen (30) und das Schubelement (82) kraft- und/oder formschlüssig miteinander verbunden sind.

13. Betätigungsvorrichtung nach einem der Ansprüche 9 bis 11, **dadurch gekennzeichnet, dass** die Steuerschienen (30) und das Schubelement (82) einstückig sind.

14. Betätigungsvorrichtung nach einem der Ansprüche 1 bis 13, **dadurch gekennzeichnet, dass** die Steuerschienen (30) zwischen Führungselementen (36, 37, 38, 90) gleitgeführt sind.

15. Betätigungsvorrichtung nach Anspruch 14, **dadurch gekennzeichnet, dass** die Führungselemente zwei Führungsschienen (90) sind.

16. Betätigungsvorrichtung nach Anspruch 16, **dadurch gekennzeichnet, dass** die Führungsschienen (90) an oder in einer Aufspannplatte (12) befestigt sind.

17. Betätigungsvorrichtung nach Anspruch 15 oder 16, **dadurch gekennzeichnet, dass** die Steuerschienen (30) an ihren den Führungsschienen (90) zugewandten Seitenflächen (39) Gleitleisten (35) aufweisen, die in Nuten (94) der Führungsschienen (90) gleitgeführt sind.

18. Betätigungsvorrichtung nach einem der Ansprüche 14 bis 16, **dadurch gekennzeichnet, dass** die Gleitleisten (35) zumindest teilweise aus einem selbstschmierenden oder aus einem diamantartigen Material gefertigt oder zumindest teilweise mit einem selbstschmierenden oder einem diamantartigen Material beschichtet sind.

19. Betätigungsvorrichtung nach Anspruch 14, **dadurch gekennzeichnet, dass** die Führungselemente Führungsplatten (36, 37, 38) sind.

20. Betätigungsvorrichtung nach Anspruch 19, **dadurch gekennzeichnet, dass** die Führungsplatten (36, 37, 38) mit Gleitelementen (56) versehen sind.

21. Betätigungsvorrichtung nach Anspruch 19 oder 20 , **dadurch gekennzeichnet, dass** die Führungsplatten (36, 37, 38) und/oder die Gleitelemente (56) zumindest teilweise aus einem selbstschmierenden oder aus einem diamantartigen Material gefertigt oder zumindest teilweise mit einem selbstschmierenden oder einem diamantartigen Material beschichtet sind.

22. Betätigungsvorrichtung nach einem der Ansprüche 1 bis21, **dadurch gekennzeichnet, dass** das selbstschmierende Material ein Lagermetall ist.

23. Betätigungsvorrichtung nach Anspruch 22, **dadurch gekennzeichnet, dass** das selbstschmierende Material eine Blei-, Zinn-, Aluminium- oder Kupferlegierung oder ein Sintermetall ist.

24. Betätigungsvorrichtung nach Anspruch 22 oder 23, **dadurch gekennzeichnet, dass** das selbstschmierende Material Bronze oder Sinter-Bronze ist.

25. Betätigungsvorrichtung nach einem der Ansprüche 1 bis 21, **dadurch gekennzeichnet, dass** die Oberfläche des diamantartigen Materials poliert ist.

26. Betätigungsvorrichtung nach einem der vorhergehenden Ansprüche, **dadurch gekennzeichnet, dass** aufgrund einer Relativbewegung verschleißende Bauteile, insbesondere die Gleitelemente (50), austauschbar angeordnet sind.

27. Spritzgießwerkzeug mit wenigstens einer Betätigungsvorrichtung (10) nach einem der Ansprüche 1 bis 26.

28. Spritzgießwerkzeug nach Anspruch 27, **dadurch gekennzeichnet, dass** die Betätigungsvorrichtung (10) in oder an einer Aufspannplatte (12) ausgebildet ist.

29. Spritzgießwerkzeug nach Anspruch 28, **dadurch gekennzeichnet, dass** die Aufspannplatte (12) mit einer Vertiefung (13) zur Aufnahme der Betätigungsvorrichtung (10) versehen ist.

30. Spritzgießwerkzeug nach einem der Ansprüche 27 bis 29, **dadurch gekennzeichnet, dass** die Betätigungsvorrichtung (10) bündig mit der Aufspannplatte (12) abschließt.

31. Spritzgießwerkzeug nach einem der Ansprüche 27 bis 30, **dadurch gekennzeichnet, dass** wenigstens zwei Betätigungsvorrichtungen (10) parallel nebeneinander angeordnet sind.

32. Spritzgießwerkzeug nach Anspruch 31, **dadurch gekennzeichnet, dass** die Betätigungsvorrichtungen (10) einen gemeinsamen Antrieb (80) aufweisen.

## Claims

1. Actuating device (10) for shut-off needles in injection moulds
a) with needle shut-off nozzles,
b) with a lifting element (20), on which at least two shut-off needles (16) of two needle shut-off nozzles can be fixed and which can be moved between two control rails (30), mounted longitudinally displaceably in a first direction (R1), in a second direction (R2) extending transversely in relation to the first direction (R1), and
c) with at least two sliding elements (50), which convert a movement of the control rails (30) along the first direction (R1) into a lifting movement of the lifting element (20) in the second direction (R2),
d) wherein the lifting element (20) is arranged lengthwise between the control rails (30), and
e) wherein the sliding elements (50) are arranged between the lifting element (20) and the control rails (30) in grooves (40) running obliquely in relation to the first direction (R1) and the second direction (R2), **characterized**
f) **in that** the control rails (30) and/or the sliding elements (50), being components that are moved in relation to one another and are consequently a risk of wear,are at least partially produced from a self-lubricating material or a diamantine material or are at least partially coated with a self-lubricating material or a diamantine material, and
g) **in that** the sliding elements (50) are recessed laterally into the lifting element (20).

2. Actuating device according to Claim 1, **characterized in that** the length (L) of the sliding elements (50) is greater than the thickness (D) of the lifting element (20).

3. Actuating device according to one of Claims 1 or 2, **characterized in that** the lifting element (20) is guided in a constricted manner in the second direction (R2).

4. Actuating device according to Claim 3, **characterized in that** the lifting element (20) is arranged between two stops (60, 62).

5. Actuating device according to Claim 3 or 4, **characterized in that** the stops (60, 62) are at least partially produced from a self-lubricating material or a diamantine material or are at least partially coated with a self-lubricating material or a diamantine material.

6. Actuating device according to one of Claims 1 to 5, **characterized in that** the valve needles (16) are adjustable in relation to the lifting element (20) along the second direction (R2).

7. Actuating device according to one of Claims 1 to 6, **characterized in that** the valve needles (16) can be fixed on the lifting plate (20) in an axially fixed and radially floating manner.

8. Actuating device according to one of Claims 1 to 7, **characterized in that** the lifting element (20) has at least one clearance (70) for leading through a runner, a manifold arm or the like of the injection mould.

9. Actuating device according to one of Claims 1 to 8, **characterized in that** the control rails (30) are connected to a drive (80).

10. Actuating device according to Claim 9, **characterized in that** the control rails (30) are connected to the drive (80) by way of a common thrust element (82).

11. Actuating device according to Claim 9 or 10, **characterized in that** the control rails (30) and the thrust element (82) form a U-shaped frame.

12. Actuating device according to one of Claims 9 to 11, **characterized in that** the control rails (30) and the thrust element (82) are connected to each other with force-locked and/or interlocking engagement.

13. Actuating device according to one of Claims 9 to 11, **characterized in that** the control rails (30) and the thrust element (82) are of one piece.

14. Actuating device according to one of Claims 1 to 13, **characterized in that** the control rails (30) are guided in a sliding manner between guiding elements (36, 37, 38, 90).

15. Actuating device according to Claim 14, **characterized in that** the guiding elements are two guiding rails (90).

16. Actuating device according to Claim 16, **characterized in that** the guiding rails (90) are fastened on or in a platen (12).

17. Actuating device according to Claim 15 or 16, **characterized in that** the control rails (30) have on their side surfaces (39) facing the guiding rails (90) sliding strips (35), which are guided in a sliding manner in grooves (94) of the guiding rails (90).

18. Actuating device according to one of Claims 14 to 16, **characterized in that** the sliding strips (35) are at least partially produced from a self-lubricating material or a diamantine material or are at least partially coated with a self-lubricating material or a diamantine material.

19. Actuating device according to Claim 14, **characterized in that** the guiding elements are guiding plates (36, 37, 38).

20. Actuating device according to Claim 19, **characterized in that** the guiding plates (36, 37, 38) are provided with sliding elements (56).

21. Actuating device according to Claim 19 or 20, **characterized in that** the guiding plates (36, 37, 38) and/or the sliding elements (56) are at least partially produced from a self-lubricating material or a diamantine material or are at least partially coated with a self-lubricating material or a diamantine material.

22. Actuating device according to one of Claims 1 to 21, **characterized in that** the self-lubricating material is a bearing metal.

23. Actuating device according to Claim 22, **characterized in that** the self-lubricating material is a lead, tin, aluminium or copper alloy or a sintered metal.

24. Actuating device according to Claim 22 or 23, **characterized in that** the self-lubricating material is bronze or sintered bronze.

25. Actuating device according to one of Claims 1 to 21, **characterized in that** the surface of the diamantine material is polished.

26. Actuating device according to one of the preceding claims, **characterized in that** components that wear as a result of relative movement, in particular the sliding elements (50), are arranged in an exchangeable manner.

27. Injection mould comprising at least one actuating device (10) according to one of Claims 1 to 26.

28. Injection mould according to Claim 27, **characterized in that** the actuating device (10) is formed in or on a platen (12).

29. Injection mould according to Claim 28, **characterized in that** the platen (12) is provided with a depression (13) for receiving the actuating device (10).

30. Injection mould according to one of Claims 27 to 29, **characterized in that** the actuating device (10) finishes flush with the platen (12).

31. Injection mould according to one of Claims 27 to 30, **characterized in that** at least two actuating devices (10) are arranged parallel next to one another.

32. Injection mould according to Claim 31, **characterized in that** the actuating devices (10) have a common drive (80).

## Revendications

1. Dispositif d'actionnement (10) pour des pointeaux de vannes dans des outils de moulage par injection comportant des buses
a) avec des vannes à pointeaux,
b) avec un élément de levée (20) sur lequel au moins deux pointeaux de vannes (16) de deux buses avec des vannes à pointeaux peuvent être fixés et qui est déplaçable entre deux rails de commande (30), montés de façon coulissante longitudinalement dans une première direction (R1), dans une deuxième direction (R2) s'étendant transversalement à la première direction (R1), et
c) avec au moins deux éléments de glissement (50), qui convertissent un mouvement des rails de commande (30) le long de la première direction (R1) en un mouvement de levée de l'élément de levée (20) dans la deuxième direction (R2),
d) l'élément de levée (20) étant disposé en longueur entre les rails de commande (30),
e) les éléments de glissement (50) étant disposés entre l'élément de levée (20) et les rails de commande (30), dans des rainures (40) s'étendant en oblique par rapport à la première direction (R1) et à la deuxième direction (R2), **caractérisé en ce que**
f) les rails de commande (30) et/ou les éléments de glissement (50), étant des composants déplacés les uns par rapport aux autres et dès lors soumis à l'usure, sont fabriqués au moins en partie en un matériau autolubrifiant ou un matériau diamantin ou sont revêtus au moins en partie avec un matériau autolubrifiant ou un matériau diamantin, et
g) les éléments de glissement (50) sont insérés latéralement dans l'élément de levée (20)..

2. Dispositif d'actionnement selon la revendication 1, **caractérisé en ce que** la longueur (L) des éléments de glissement (50) est plus grande que l'épaisseur (D) de l'élément de levée (20).

3. Dispositif d'actionnement selon l'une quelconque des revendications 1 à 2, **caractérisé en ce que** l'élément de levée (20) est en guidage forcé dans la deuxième direction (R2).

4. Dispositif d'actionnement selon la revendication 3, **caractérisé en ce que** l'élément de levée (20) est disposé entre deux butées (60, 62).

5. Dispositif d'actionnement selon la revendication 3 ou 4, **caractérisé en ce que** les butées (60, 62) sont fabriquées au moins en partie en un matériau autolubrifiant ou un matériau diamantin ou sont revêtues au moins en partie avec un matériau autolubrifiant ou un matériau diamantin.

6. Dispositif d'actionnement selon l'une quelconque des revendications 1 à 5, **caractérisé en ce que** les pointeaux de vannes (16) sont réglables par rapport à l'élément de levée (20) le long de la deuxième direction (R2).

7. Dispositif d'actionnement selon l'une quelconque des revendications 1 à 6, **caractérisé en ce que** les pointeaux de vannes (16) sont axialement fixes et peuvent être tenus de façon radialement flottante sur la plaque de levée (20).

8. Dispositif d'actionnement selon l'une quelconque des revendications 1 à 7, **caractérisé en ce que** l'élément de levée (20) présente au moins un évidement (70) pour le passage d'un canal d'écoulement, d'un bras de distributeur ou analogue de l'outil de moulage par injection.

9. Dispositif d'actionnement selon l'une quelconque des revendications 1 à 8, **caractérisé en ce que** les rails de commande (30) sont reliés à un entraînement (80).

10. Dispositif d'actionnement selon la revendication 9, **caractérisé en ce que** les rails de commande (30) sont reliés à l'entraînement (80) par un élément de poussée commun (82).

11. Dispositif d'actionnement selon la revendication 9 ou 10, **caractérisé en ce que** les rails de commande (30) et l'élément de poussée (82) forment un cadre en forme de U.

12. Dispositif d'actionnement selon l'une quelconque des revendications 9 à 11, **caractérisé en ce que** les rails de commande (30) et l'élément de poussée (82) sont assemblés l'un à l'autre par complémentarité de force et/ou de forme.

13. Dispositif d'actionnement selon l'une quelconque des revendications 9 à 11, **caractérisé en ce que** les rails de commande (30) et l'élément de poussée (82) sont d'une seule pièce.

14. Dispositif d'actionnement selon l'une quelconque des revendications 1 à 13, **caractérisé en ce que** les rails de commande (30) sont guidés de façon glissante entre des éléments de guidage (36, 37, 38, 90).

15. Dispositif d'actionnement selon la revendication 14, **caractérisé en ce que** les éléments de guidage sont deux rails de guidage (90).

16. Dispositif d'actionnement selon la revendication 15, **caractérisé en ce que** les rails de guidage (90) sont fixés à ou dans une plaque de fixation (12).

17. Dispositif d'actionnement selon la revendication 15 ou 16, **caractérisé en ce que** les rails de commande (30) présentent, sur leurs faces latérales (39) tournées vers les rails de guidage (90), des lattes de glissement (35) qui sont guidées de façon glissante dans des rainures (94) des rails de guidage (90).

18. Dispositif d'actionnement selon l'une quelconque des revendications 14 à 16, **caractérisé en ce que** les lattes de glissement (35) sont fabriquées au moins en partie en un matériau autolubrifiant ou un matériau diamantin ou sont revêtues au moins en partie avec un matériau autolubrifiant ou un matériau diamantin.

19. Dispositif d'actionnement selon la revendication 14, **caractérisé en ce que** les éléments de guidage sont des plaques de guidage (36, 37, 38).

20. Dispositif d'actionnement selon la revendication 19, **caractérisé en ce que** les plaques de guidage (36, 37, 38) sont munies d'éléments de glissement (56).

21. Dispositif d'actionnement selon la revendication 19 ou 20, **caractérisé en ce que** les plaques de guidage (36, 37, 38) et/ou les éléments de glissement (56) sont fabriqués au moins en partie en un matériau autolubrifiant ou un matériau diamantin ou sont revêtus au moins en partie avec un matériau autolubrifiant ou un matériau diamantin.

22. Dispositif d'actionnement selon l'une quelconque des revendications 1 à 21, **caractérisé en ce que** le matériau autolubrifiant est un métal antifriction.

23. Dispositif d'actionnement selon la revendication 24, **caractérisé en ce que** le matériau autolubrifiant est un alliage de plomb, d'étain, d'aluminium ou de cuivre ou un métal fritté.

24. Dispositif d'actionnement selon la revendication 22 ou 23, **caractérisé en ce que** le matériau autolubrifiant est un bronze ou un bronze fritté.

25. Dispositif d'actionnement selon l'une quelconque des revendications 1 à 21, **caractérisé en ce que** la surface du matériau diamantin est polie.

26. Dispositif d'actionnement selon l'une quelconque des revendications précédentes, **caractérisé en ce que** des composants qui s'usent en raison du mouvement relatif, en particulier les éléments de glissement (50), sont disposés de façon remplaçable.

27. Outil de moulage par injection comportant au moins un dispositif d'actionnement (10) selon l'une quelconque des revendications 1 à 26.

28. Outil de moulage par injection selon la revendication 27, **caractérisé en ce que** le dispositif d'actionnement (10) est réalisé dans ou sur une plaque de fixation (12).

29. Outil de moulage par injection selon la revendication 28, **caractérisé en ce que** la plaque de fixation (12) est munie d'un creux (13) destiné à recevoir le dispositif d'actionnement (10).

30. Outil de moulage par injection selon l'une quelconque des revendications 27 à 29, **caractérisé en ce que** le dispositif d'actionnement (10) est logé à fleur de la plaque de fixation (12).

31. Outil de moulage par injection selon l'une quelconque des revendications 27 à 30, **caractérisé en ce qu'**au moins deux dispositifs d'actionnement (10) sont disposés parallèlement l'un à côté de l'autre.

32. Outil de moulage par injection selon la revendication 31, **caractérisé en ce que** les dispositifs d'actionnement (10) présentent un entraînement commun (80).
